# EUROPÄISCHE PATENTSCHRIFT

(11) **EP 2 191 241 B1**
(45) Veröffentlichungstag und Bekanntmachung des Hinweises auf die Patenterteilung: **09.03.2011**
(21) Anmeldenummer: 08775300.0
(22) Anmeldetag: 23.07.2008
(51) Int. Cl.: G01D 11/24, G01K 1/14, G01L 19/00

(54) **STECKFÜHLER ZUR MESSUNG MINDESTENS EINER EIGENSCHAFT EINES FLUIDEN MEDIUMS**
PLUG-IN SENSOR FOR MEASURING AT LEAST ONE PROPERTY OF A FLUID MEDIUM
SONDE A INSERER DESTINEE A MESURER AU MOINS UNE PROPRIETE D'UN FLUIDE

(30) Priorität: 07.09.2007 DE 102007042789
(43) Veröffentlichungstag der Anmeldung: 02.06.2010
(73) Patentinhaber: Robert Bosch GmbH, 70442 Stuttgart (DE)
(72) Erfinder: STOLL, Oliver, 72762 Reutlingen (DE); ROESSER, Christian, 71723 Grossbottwar (DE); ENGELHARDT, Joerg, 71254 Ditzingen (DE)
(86) Internationale Anmeldenummer: PCT/EP2008/059630
(87) Internationale Veröffentlichungsnummer: WO 2009/033868

(56) Entgegenhaltungen:
- DE-A1- 10 243 538
- DE-A1- 19 745 244
- DE-U1- 9 313 057

## Beschreibung

### Stand der Technik

In verschiedenen Bereichen der Technik müssen Parameter fluider Medien, also beispielsweise von Gasen und/oder Flüssigkeiten, gemessen werden. Derartige Parameter umfassen beispielsweise einen Druck, eine Temperatur, eine Strömungsgeschwindigkeit, eine Dichte oder ähnliche physikalische und/oder chemische Eigenschaften bzw. Parameter des fluiden Mediums. Die folgende Beschreibung der Erfindung bezieht sich speziell auf Anwendungen, bei welchen gleichzeitig ein Druck (p) und eine Temperatur (T) gemessen werden sollen, was beispielsweise mit kombinierten p-T-Sensoren möglich ist. Die Erfindung ist jedoch nicht auf derartige p-T-Sensoren beschränkt.

Ein wichtiges Anwendungsbeispiel von Sensoren der oben genannten Art sind Druck- und Temperatursensoren für Klimaanlagen. In Klimaanlagen wird üblicherweise die Verdampfungswärme eines Kühlmittels zum Abkühlen von Luft (oder eines anderen zu kühlenden Mediums) genutzt. Anschließend wird in einem Kompressor das Kühlmittel wieder verdichtet und damit verflüssigt. Beim Verdichten tritt eine Erwärmung des Kühlmittels auf. Die aufgenommene Wärme wird, üblicherweise an einem Gaskühler, wieder an die Umgebung abgegeben. Der Verdichtungsvorgang mittels des Kompressors muss dabei üblicherweise derart gesteuert werden, dass der Betriebsdruck einen vorgegebenen Maximaldruck und die Betriebstemperatur eine vorgegebene Maximaltemperatur nicht übersteigen. Druck und Temperatur müssen zu diesem Zweck erfasst werden. Neben diesem Anwendungsbeispiel in Klimaanlagen sind zahlreiche weitere Anwendungsbeispiele von Sensoren, insbesondere von Druck- und Temperatursensoren aus den verschiedensten Gebieten der Naturwissenschaften und Ingenieurwissenschaften, insbesondere der Verfahrenstechnik und dem Automobilbau, bekannt.

Die Verwendung von zwei separaten Sensoren zur Erfassung von Druck und Temperatur stellt einen erheblichen Aufwand dar, da zumindest zwei Stecker und mehrere Kabelstränge vorgehalten werden müssen. Weiterhin ergeben sich durch Verwendung mehrerer einzelner Sensoren mehrere Dichtstellen an den Schnitt- und Verbindungsstellen der einzelnen Komponenten zueinander. Daher wird angestrebt, sowohl das Druck- als auch das Temperatursignal durch einen kombinierten Druck- und Temperatursensor zu erhalten. Derartige kombinierte Druck- und Temperatursensoren sind aus EP 1521 061 A2, DE 101 09 095 A1 sowie aus DE 197 45 244 A1 und EP 0 893 676 A2 bekannt. EP 1518 098 B1 beschreibt einen ähnlichen Sensor, welcher jedoch als reiner Hochdruck-Sensor ausgestaltet ist.

Für zukünftige in Kraftfahrzeugen eingesetzte Klimaanlagen steht der Einsatz der herkömmlichen R134a-Klimaanlagen durch CO₂-Klimaanlagen zu erwarten, da gemäß der EU-Gesetzgebung das in Klimaanlagen bisher eingesetzte Kühlmittel R134a ab dem Jahre 2016 vollständig verboten werden wird. Bei derartigen CO₂-Klimaanlagen treten im Vergleich zu konventionellen Klimaanlagen erhöhte Betriebsdrucke und Temperaturbelastungen auf, welche vollkommen neue Anforderungen an Druck- und Temperaturbelastung der Bauteile und Sensoren stellen. So treten im Betrieb Drücke bis zu 140 bar und Medientemperaturen bis zu 180°C auf. Typischerweise werden an die Dichtigkeit der Systeme Leckageanforderungen von weniger als 1 g pro Jahr gestellt.

Zum Zweck der Abdichtung eines Sensors weisen die aus dem Stand der Technik bekannten Sensoren häufig Dichtflächen und/oder andere Dichteinrichtungen auf. Eine derartige Dichtung ist aus DE 10 243 538 bekkant. Die Sensoren sind in der Regel mit Gewindestücken versehen, mittels derer die Sensoren in ein Gehäuse, in welchem das fluide Medium aufgenommen ist, eingeschraubt werden können. In den Gewindestücken sind in vielen Fällen Gewindeabflachungen vorgesehen, welche als Abblasnuten dienen und ein Einschrauben des Sensors in das Gehäuse vereinfachen.

Diese Gewindeabflachungen am Gewinde weisen jedoch den Nachteil auf, dass durch diese Abflachungen flüssige und/oder gasförmige korrosive Medien aus der Umgebung zur Dichtfläche gelangen können. Beispielsweise können derartige Sensoren im Motorraum eingesetzt werden, so dass Öle, Fette, Motorreiniger, Batteriesäure und andere Arten von Verunreinigungen, welche in der Umgebung des Motors auftreten können, zur Dichtfläche gelangen können und diese beschädigen können. Hierdurch sinkt die Zuverlässigkeit der Dichtung mit der Betriebsdauer.

### Offenbarung der Erfindung

Es wird daher ein Steckfühler zur Messung mindestens einer Eigenschaft eines fluiden Mediums vorgeschlagen, welcher die oben beschriebenen Nachteile bekannter Steckfühler zumindest weitgehend vermeidet. Bei der mindestens einen Eigenschaft des fluiden Mediums, wobei es sich insbesondere um ein Gas oder eine Flüssigkeit handeln kann, kann eine oder mehrere der oben beschriebenen physikalischen oder chemischen Eigenschaften umfassen. Insbesondere kann es sich dabei um mindestens eine der folgenden Eigenschaften handeln: einen Druck, eine Temperatur, eine Dichte, eine Strömungsgeschwindigkeit, einen Massen- oder Volumenstrom oder eine beliebige Kombination derartiger Eigenschaften. Insbesondere eignet sich der vorgeschlagene Steckfühler zur Messung eines Drucks, einer Temperatur oder eines Druckes und einer Temperatur. Der Steckfühler kann insbesondere eingesetzt werden für Anwendungen im Kraftfahrzeugbereich, also insbesondere Anwendungen der Messung im Motorraum, im Ansaugtrakt, in einer Klimaanlage oder in anderen Komponenten eines Kraftfahrzeuges.

Unter einem "Steckfühler" ist dabei ein beliebiger Fühler zu verstehen, welcher im Innenraum eines Gehäuses, in welchem das fluide Medium aufgenommen ist (beispielsweise dort ruht oder strömt) messen kann. Insbesondere soll der Steckfühler geeignet sein, um durch eine Öffnung dieses Gehäuses in den Innenraum eingebracht zu werden. Der Steckfühler kann insbesondere fingerförmig ausgestaltet sein.

Der Steckfühler weist mindestens einen Sensorkörper mit mindestens einem Außengewinde zum Einschrauben des Steckfühlers in eine Gewindebohrung des Gehäuses auf. Zum Abdichten des Innenraums des Gehäuses gegen einen Außenraum ist weiterhin mindestens eine Dichtfläche vorgesehen, welche den Steckfühlers gegen das Gehäuse abdichtet. Wie oben beschrieben ist diese Dichtung besonders anfällig gegenüber einem Angriff korrosiver Gase oder Flüssigkeiten aus dem Innenraum des Gehäuses, so dass erfindungsgemäß vorgeschlagen wird, diese Dichtfläche durch ein Gewinde des Steckfühlers zu schützen. Dementsprechend wird vorgeschlagen, das Außengewinde des Steckfühlers derart zu unterteilen, dass dieses mindestens zwei Gewindeabschnitte aufweist. So ist ein erster Gewindeabschnitt vorgesehen, welcher mindestens einen durchgehenden Gewindegang aufweist. Unter einem "durchgehenden" Gewindegang ist ein Gewindegang zu verstehen, welcher mindestens eine 360°-Umdrehung durchführt, ohne dass dieser Gewindegang dabei wesentlich unterbrochen wird, zum Beispiel durch eine Ausblasnut. Kleinere Unterbrechungen, beispielsweise durch Kerben, können jedoch tolerierbar sein, insbesondere wenn diese kleineren Unterbrechungen durch einen darunter- oder darüberliegenden Gewindeabschnitt verdeckt werden. Auch derartige geringfügige Unterbrechungen sind daher tolerierbar und unter "durchgehend" zu subsummieren. Vorzugsweise ist der durchgehende Gewindegang jedoch in keiner Weise unterbrochen. Der erste Gewindeabschnitt mit seinem mindestens einem durchgehenden Gewindegang schützt somit das Gewinde und die Dichtfläche des Steckfühlers und den mindestens einen Sensor des Steckfühlers vor korrosiven Medien und stellt somit die erforderliche Dichtigkeit und Langlebigkeit des Steckfühlers her.

Um weiterhin ein problemloses Einbringen des Steckfühlers in das Gehäuse zu ermöglichen, ist mindestens ein zweiter Gewindeabschnitt vorgesehen. Dieser umfasst mindestens einen unterbrochenen Gewindegang, wobei diese mindestens eine Unterbrechung des mindestens einen unterbrochenen Gewindegangs mindestens eine Ausblasnut bildet. Diese mindestens eine Ausblasnut, wobei vorzugsweise zwei, drei, vier oder mehr Ausblasnuten vorgesehen sind, ermöglicht eine Entlüftung beim Einstecken des Steckfühlers in das Gehäuse und somit ein bequemes und problemloses Einschrauben des Steckfühlers in das Gehäuse. Vorzugsweise sind diese Ausblasnuten derart gestaltet, dass diese sich im Wesentlichen (d.h. mit einer Toleranz von beispielsweise +/- 5 Grad) parallel zu einer Längsachse des Steckfühlers erstrecken.

Der mindestens eine zweite Gewindeabschnitt ist vorzugsweise zwischen dem mindestens einen ersten Gewindeabschnitt und der Dichtfläche angeordnet. Auf diese Weise schützt der erste Gewindeabschnitt nicht nur die Dichtfläche, sondern auch den zweiten Gewindeabschnitt effizient. Vorzugsweise weist dieser mindestens eine erste Gewindeabschnitt zwischen genau einem und genau zwei durchgehenden Gewindegängen auf. Diese Weiterbildung der Erfindung ist insbesondere vorteilhaft in Zusammenhang mit einer weiteren Weiterbildung der Erfindung, bei welcher der Steckfühler ganz oder teilweise mittels eines pulvermetallurgischen Verfahrens, insbesondere mittels eines Metall-Spritzgießverfahrens (englisch Metal Injection Molding, MIM) hergestellt ist. So kann insbesondere das Außengewinde ganz oder teilweise in dem pulvermetallurgischem Verfahren, insbesondere mittels des Metall-Spritzgießverfahrens, hergestellt werden. Diese Weiterbildung der Erfindung ermöglicht eine einfache und kostengünstige Großserienfertigung in einem Spritzgießprozess. Eine Nacharbeit am Bauteil (z.B. ein Gewindeschneiden) ist in der Regel nicht erforderlich. Beim Einschrauben des Gewindeabschnittes in das Gehäuse werden eventuell noch vorhandene Trenngrate abgeschert. Durch die bevorzugte Position der durchgehenden Gewindegänge im oberen Bereich des Gewindeabschnitts führt das Abscheren nicht zu einer Erhöhung des Einschraubmoments. Spritzgießtechnisch sind zwei vollständige Gewindegänge noch maßhaltig herstellbar und auch in der Regel problemlos entformbar.

Pulvermetallurgische Verfahren, insbesondere das MIM-Verfahren, sind dem Fachmann bekannt. Beim MIM-Verfahren wird eine geeignete Metallpulver-Mischung mit verschiedenen organischen und/oder anorganischen Materialien gemischt, um eine Verarbeitung mittels eines Spritzgießvorgangs zu ermöglichen. Beispielsweise kann die Mischung neben dem Metallpulver einen oder mehrere organische Bindermaterialien umfassen, welche die erforderlichen Eigenschaften, beispielsweise eine Thixotropie, gewährleisten. Nach dem Spritzgießen, wodurch ein so genannter "Grünling" gebildet wird, wird dann in einem ersten Temperaturbehandlungsschritt (welcher auch ganz oder teilweise durch chemische Verfahren ersetzt werden kann) das Bindermaterial ganz oder teilweise aus dem Grünling entfernt, und es entsteht ein so genannter "Braunling". Anschließend wird in einem weiteren Temperaturbehandlungsschritt der Braunling gesintert, wobei beim Sintern die Metallpartikel teilweise miteinander verschmelzen und ein solider (wenn auch üblicherweise poröser) Metallkörper entsteht. Auf diese Weise lässt sich, im Gegensatz zu konventioneller, spanabhebender Bearbeitung, ein kostengünstiges Bauteil erstellen. Dieses kostengünstige Bauteil, welches insbesondere das Außengewinde ganz oder teilweise umfassen kann, lässt sich dann auch kombinieren mit weiteren Bauteilen, beispielsweise mit Bauteilen, welche mittels anderer Fertigungsverfahren hergestellt worden sind. Auf diese Weise lassen sich konventionelle Technologien mit pulvermetallurgischen Technologien kombinieren.

Der vorgeschlagene Steckfühler ermöglicht einen effizienten Schutz der Dichtfläche und/oder des übrigen Gewindes (je nach Anordnung des ersten Gewindeabschnittes) vor korrosiven Medien, ohne dass hierfür zusätzliche Bauteile (wie z.B. Dichtungen) erforderlich wären. Es können auch mehrere erste Gewindeabschnitte vorgesehen sein, beispielsweise ein erster Gewindeabschnitt, um die Dichtfläche zu schützen, und ein zweiter Gewindeabschnitt, um weitere Teile des Außengewindes vor korrosiven Medien zu schützen. Auf diese Weise lässt sich, insbesondere unter Verwendung des pulvermetallurgischen Verfahrens, einfach und schnell ein zuverlässiger, kostengünstiger und langlebiger Steckfühler herstellen, welcher dennoch allen Qualitätsanforderungen genügt und diese sogar überschreitet. Aufwendige Handarbeitsschritte können ganz oder teilweise eingespart werden. Der integrierte Spritzschutz oder Medienschutz durch den mindestens einen ersten Gewindeabschnitt erhöht die Lebensdauer gegenüber herkömmlichen Steckfühlern mit durchgehenden Ausblasnuten erheblich. Auftreffende Flüssigkeiten können durch diesen Spritzschutz nicht bis zur Dichtfläche gelangen, so dass eine Korrosion in diesem Bereich effizient verhindert wird.

Der erfindungsgemäße Steckfühler lässt sich durch verschiedene bevorzugte Ausführungen zusätzlich vorteilhaft weiterbilden. So ist es beispielsweise bevorzugt, wenn die mindestens eine Ausblasnut mindestens eine Abflachung im zweiten Gewindeabschnitt umfasst. Unter einer "Abflachung" ist dabei eine Sekanten-förmige Ausblasnut zu verstehen, also ein Bereich, in welchem die Gewindegänge auf einer Sekanten-Ebene aufliegen könnten.

Weiterhin ist es bevorzugt, wenn der mindestens eine Sensor des Steckfühlers mindestens einen der folgenden Sensoren umfasst: einen Temperatursensor, insbesondere einen NTC-Widerstand, einen Drucksensor (beispielsweise einen Membran-Drucksensor; insbesondere einen in Mikrotechnik hergestellten Membran-Drucksensor), einen Luftmassenmesser, insbesondere einen Heißfilmluftmassenmesser. Wie oben beschrieben, ist es besonders bevorzugt, wenn der Steckfühler als p-T-Sensor ausgebildet ist. Zu diesem Zweck kann ein Temperaturfühler in einem schräg zu einer Sensorachse des Steckfühlers angeordneten Messfinger aufgenommen sein, welcher in das fluide Medium hineinragt. Auch dieser Messfinger kann, beispielsweise im selben Arbeitsschritt wie die Herstellung des mindestens einen Außengewindes, in einem pulvermetallurgischem Verfahren hergestellt sein. Dabei ist es besonders bevorzugt, wenn der Temperaturfühler zumindest näherungsweise auf der Sensorachse angeordnet ist, da diese Anordnung gewährleistet, dass auch bei unterschiedlichem Einschrauben des Steckfühlers in das Gehäuse stets eine näherungsweise identische Positionierung des Temperaturfühlers im Innenraum stattfindet. Unter "zumindest näherungsweise" ist dabei auch eine Anordnung zu verstehen, welche geringfügig von dieser Positionierung abweicht, beispielsweise eine Anordnung, welche um nicht mehr als das Ein- bis Zweifache der maximalen Ausdehnung des Temperaturfühlers von dieser Positionierung abweicht.

Weiterhin kann der Sensorkörper derart ausgestaltet sein, dass dieser auf seiner dem fluiden Medium zuweisenden Seite einen Dichtkonus aufweist. Dieser Dichtkonus erhöht, wie aus dem Stand der Technik bekannt ist, die Abdichtung des Steckfühlers beziehungsweise die Abdichtung des Innenraums gegenüber dem Außenraum, zusätzlich. Auf diese Weise wirkt der Dichtkonus zuverlässig mit der von diesem Dichtkonus getrennten Dichtfläche zusammen.

Neben dem beschriebenen Steckfühler in einer der oben dargestellten Ausführungsformen wird weiterhin ein Verfahren zur Herstellung eines Steckfühler zur Messung mindestens einer Eigenschaft eines fluiden Mediums vorgeschlagen, insbesondere eines Steckfühlers der oben beschriebenen Art in einer der dargestellten Ausführungsformen. Insofern kann weitgehend auf die obige Beschreibung verwiesen werden bezüglich der bevorzugten Ausführungsformen des Steckfühlers. Der Steckfühler weist mindestens einen Sensor zur Erfassung der mindestens einen Eigenschaft auf. Weiterhin weist der Steckfühler mindestens einen Sensorkörper mit einem Außengewinde zum Einschrauben des Steckfühlers in eine Gewindebohrung eines Gehäuses auf. Weiterhin weist der Steckfühler mindestens eine Dichtfläche zum Abdichten eines Innenraums des Gehäuses gegen einen Außenraum auf. Das Außengewinde weist wiederum mindestens zwei Gewindeabschnitte auf, wobei bezüglich der Ausgestaltung der Gewindeabschnitte auf die oben dargestellte Beschreibung verwiesen werden kann. Das Verfahren ist dabei derart ausgestaltet, dass der Steckfühler, insbesondere das mindestens eine Außengewinde, ganz oder teilweise mittels eines pulvermetallurgischen Verfahrens, insbesondere mittels eines Metall-Spritzgießverfahrens, hergestellt wird.

### Kurze Beschreibung der Zeichnungen

Ausführungsbeispiele der Erfindung sind in den Zeichnungen dargestellt und in der nachfolgenden Beschreibung näher erläutert. Es zeigen
- Figur 1: eine Querschnittszeichnung eines Ausführungsbeispiels eines erfindungsge- mäßen Steckfühlers; und
- Figuren 2A und 2B: verschiedene perspektivische Ansichten eines Teils des Steckfühlers gemäß Figur 1 mit Detaildarstellung des Gewindeabschnitts.

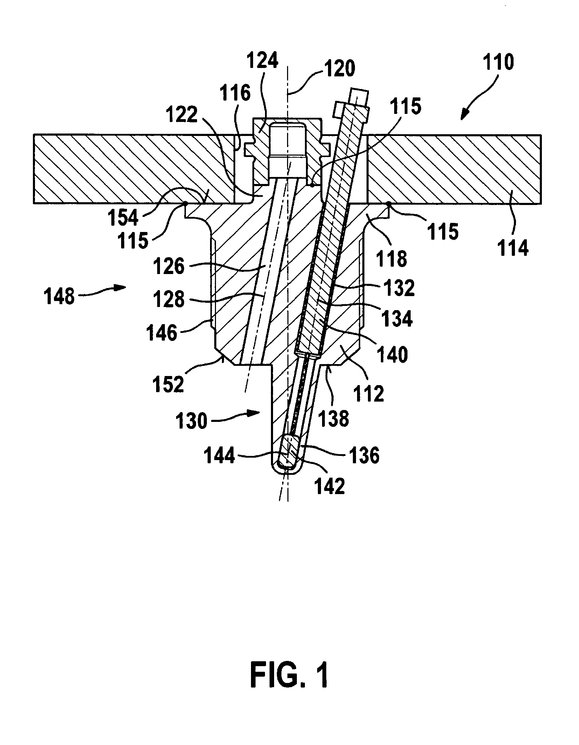

In Figur 1 ist ein Ausführungsbeispiel eines erfindungsgemäßen Steckfühlers 110 in Schnittdarstellung gezeigt. Der Steckfühler 110 weist einen Sensorkörper 112 auf. Oberhalb des Sensorkörpers 112 ist ein Sechskant 114 mit einer zentralen Bohrung 116 vorgesehen. Der Sensorkörper 112 ist mit dem Sechskant 114 vorzugsweise durch eine stoffschlüssige Verbindung 115 (beispielsweise Schweißen) verbunden, dergestalt, dass der Sensorkörper 112 konzentrisch zur zentralen Bohrung 116 angeordnet ist und dass die Oberseite des Sensorkörpers 112 durch die zentrale Bohrung 116 zugänglich ist. Auf diese Weise können beispielsweise auf der Oberseite des Sechskants 114 in Figur 1 elektronische Ansteuerkomponenten angeordnet werden, beispielsweise Steckverbindungen zum Kontaktieren des Steckfühlers 110.

Die stoffschlüssigen Verbindungen der einzelnen Bauteile sind in Figur 1 allgemein mit dem Bezugszeichen 115 bezeichnet. Der Sensorkörper 112 weist zum Zweck einer stoffschlüssigen Verbindung 115 zwischen Sensorkörper 112 und Sechskant 114 an seinem oberen, dem Sechskant 114 zugewandten Ende einen Ansatz 118 mit einer Auflagefläche 154 auf.

Der Sensorkörper 112 weist eine Sensorkörperachse 120 auf. Am oberen Ende des Sensorkörpers 112 ist ein Sensoransatz 122 vorgesehen, welcher im montierten Zustand des Steckfühlers 110 in die zentrale Bohrung 116 hineinragt und auf welchen, symmetrisch zur Sensorkörperachse 120, ein Drucksensor 124 aufgesetzt und vorzugsweise ebenfalls durch stoffschlüssige Verbindung 115 angebunden ist. Beispielsweise kann es sich dabei, wie oben beschrieben, um einen Membran-Drucksensor 124 handeln. Alternativ oder zusätzlich zur stoffschlüssigen Verbindung können auch andere Arten der Verbindung eingesetzt werden, beispielsweise kraftschlüssige Verbindungen wie Schraubverbindungen oder formschlüssige Verbindungen.

Vom Ansatz 118 aus verläuft eine Durchgangsbohrung 126 mit einer Durchgangsbohrungsachse 128 hin zu dem zu messenden fluiden Medium zugewandten Ende 130 des Steckfühlers 110. Die Durchgangsbohrungsachse 128 ist dabei von der Sensorkörperachse 120 weggeneigt und schließt mit dieser einen Winkel von (in diesem Ausführungsbeispiel) circa 10° ein. Weiterhin ist im Sensorkörper 112 eine Temperaturfühlerbohrung 132 mit einer Temperaturfühlerbohrungsachse 134 aufgenommen. An seinem dem fluiden Medium zugewandten Ende 130 mündet diese Temperaturfühlerbohrung 132 als Sacklochbohrung in einem Messfinger 136, welcher in das fluide Medium, ausgehend von einer im Wesentlichen kreisförmigen Stirnfläche 138, hineinragt. Dabei ist die Temperaturfühlerbohrungsachse 134 der Sensorkörperachse 120 zugeneigt, so dass diese einen Winkel von ebenfalls circa 10° einschließen. In der Temperaturfühterbohrung 132 ist ein Temperaturfühler 140 aufgenommen, welcher an seinem unteren Ende ein Temperatursensorelement 142 aufweist. Bei diesem Temperatursensorelement kann es sich beispielsweise um einen NTC-Widerstand handeln. Das Temperatursensorelement 142 wird beispielsweise mittels eines thermisch leitenden Klebers in der Temperaturfühlerbohrung 132 vergossen und dadurch gleichzeitig fixiert und thermisch an den Messfinger 136 angekoppelt. Um den Wärmeabfluss über den Sensorkörper 112 zu verringern, ist die Füllhöhe dieses Wärmeleitklebers im Idealfall derart gewählt, dass lediglich das Temperatursensorelement 142 mit Leitkleber ummantelt ist.

Durch die schräge Anordnung der Temperaturfühlerbohrung 132 relativ zur Sensorkörperachse 120 ist gewährleistet, dass das Temperatursensorelement 142 zentral im Mediumstrom sitzt, unabhängig von der Orientierung, unter welcher der Steckfühler 110 in das Medium eingebracht wird. Dementsprechend ist die Temperaturfühlerbohrung 132 in diesem Ausführungsbeispiel derart gewählt, dass das Temperatursensorelement 142 gerade mittig über dem Schnittpunkt 144 zwischen Temperaturfühlerbohrungsachse 134 und Sensorkörperachse 120 zu liegen kommt.

Der Steckfühler 110 ist derart ausgestaltet, dass dieser in eine (nicht dargestellte) Steckfühlerbohrung in einem Gehäuse eingeschraubt werden kann. Beispielsweise kann es sich bei dieser Steckfühlerbohrung um eine Bohrung in einem Gehäuse eines Rohrleitungssystems einer Klimaanlage, beispielsweise einer CO₂-Klimaanlage, handeln. Alternativ können auch andere Anwendungen erfolgen, beispielsweise eine Anwendung im Kraftstoffsystem einer Benzin-Direkteinspritzung. Entsprechend der Anwendung taucht der Messfinger 136 in das zu messende fluide Medium ein. Dementsprechend wird die Länge des Steckfühlers 110, also die Tiefe, in welcher der Schnittpunkt 144 im Inneren des fluiden Mediums liegt, derart gewählt, dass vorzugsweise dieser Schnittpunkt 144 zentral in einem Strömungsrohr des fluiden Mediums angeordnet ist.

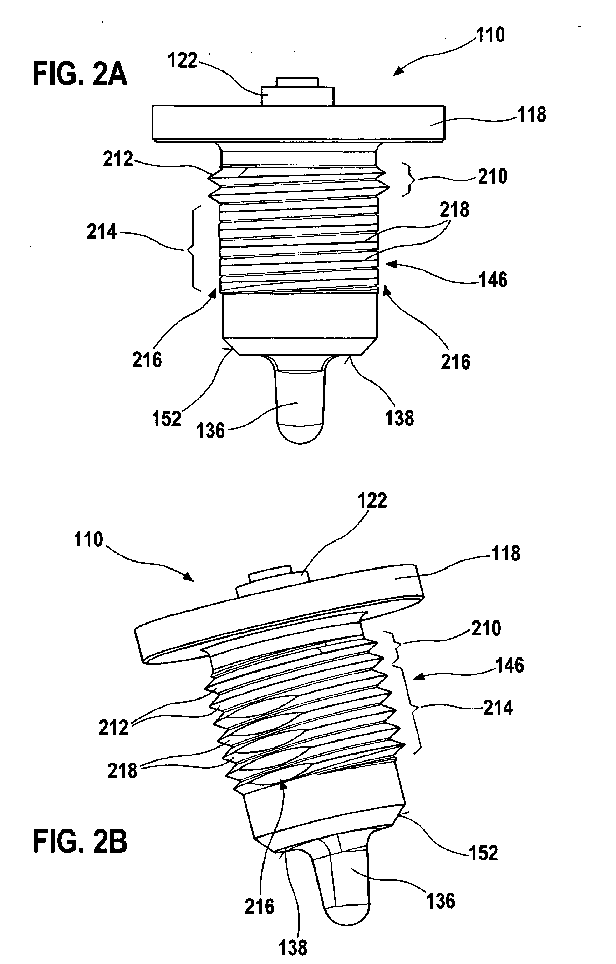

Um ein Einschrauben des Steckfühlers 110 in die Steckfühlerbohrung zu ermöglichen, ist der Sensorkörper 112 mit einem Außengewinde 146 ausgestattet. Dieses Außengewinde 146 ist in Figur 1 lediglich symbolisch dargestellt und wird nachfolgend anhand der Figuren 2A und 2B näher erläutert. Das Außengewinde 146 erstreckt sich dabei lediglich über einen Teil der zylindermantelförmigen Außenfläche 148 des Sensorkörpers 112.

Am Übergang zwischen der zylindermantelförmigen Außenfläche 148 und der Stirnfläche 138 des Sensorkörpers 112 ist eine Dichtfläche angeordnet, welche in diesem Ausführungsbeispiel die Form einer Kegeldichtung 152 aufweist. Dabei wird im vorliegenden Ausführungsbeispiel ein Kegelwinkel von circa 45° eingesetzt. Auch andere Ausgestaltungen der Dichtfläche sind jedoch möglich. Ein Vorteil dieser Anordnung der Kegeldichtung 152 an dem dem Medium zugewandten Ende 130 des Steckfühlers 110 liegt insbesondere darin, dass die Kegeldichtung 152 das Außengewinde 146 zumindest weitgehend vor Einflüssen aus dem Innenraum des Gehäuses schützt, also beispielsweise Einflüssen, welche vom fluiden Medium selbst ausgehen. Beispielsweise könnte beim Einsatz in einem Brennraum eine Einwirkung von Brennraumgasen sich schädlich auf das Außengewinde 146 auswirken, oder es könnten andere flüssige, gasförmige oder feste Verunreinigungen zum Außengewinde 146 gelangen und dieses auf die Dauer schädigen.

Dieser Schutz des Außengewindes 146 erstreckt sich jedoch lediglich auf ein Eindringen von schädlichen Verunreinigungen aus dem Innenraum des Gehäuses hin zum Gewinde 146. Eine weitere Quelle der Schädigung des Außengewindes 146 stellt jedoch die Oberseite des Steckfühlers 110 in Figur 1 dar. So hat in der Regel der Ansatz 118 am oberen Ende des Sensorkörpers 112 keine Dichtfunktion hin zum Gehäuse, so dass üblicherweise zwischen diesem Ansatz 118 und der Gehäusewand ein Spalt auftritt. Durch diesen Spalt können beispielsweise aus dem Motorraum feste, flüssige oder gasförmige Verunreinigungen von oben her zum Außengewinde 146 gelangen und dieses auf die Dauer schädigen. Beispielsweise können von dort Öle, Salzwasser, Spritzwasser, Batteriesäure, Motorreiniger und andere Arten von Verunreinigungen korrosiver oder nicht-korrosiver Art zum Außengewinde 146 und/oder sogar zur Dichtfläche 152 gelangen und diese auf die Dauer schädigen. Dadurch kann im Langzeiteinsatz die Dichtfunktion erheblich abnehmen, was sich nicht nur auf die Funktionalität des Steckfühlers 110 sondern auch auf die Betriebssicherheit auswirken könnte.

Dementsprechend ist das Außengewinde 146 erfindungsgemäß so ausgestaltet, dass dieses gleichzeitig einen Schutz des Außengewindes 146 selbst und der Dichtfläche 152 übernimmt. Diese Ausgestaltung des Außengewindes 146 ist im Detail in den Figuren 2A und 2B dargestellt, welche jeweils unterschiedliche perspektivische Ansichten des Steckfühlers 110 zeigen. Bei den Darstellungen in den Figuren 2A und 2B ist wiederum lediglich ein Teil des Steckfühlers 110 abgebildet. Auf den Sechskant 114 wurde in dieser Darstellung verzichtet.

Es ist zu erkennen, dass das Außengewinde 146 bei der erfindungsgemäßen Ausgestaltung des Steckfühlers 110 in zwei Abschnitte unterteilt ist: Ein oberer, erster Gewindeabschnitt 210 ist dabei mit in diesem Ausführungsbeispiel genau zwei durchgehenden Gewindegängen 212 ausgestattet. Dieser erste Gewindeabschnitt verhindert, dass von oben her, also beispielsweise über einen Spalt zwischen dem Ansatz 118 und dem Gehäuse, Verunreinigungen eindringen können, welche das übrige Gewinde und die Dichtfläche 152 schädigen könnten.

An diesen ersten Gewindeabschnitt 210 schließt sich, in Richtung hin zur Stirnfläche 138, ein zweiter Gewindeabschnitt 214 an. In diesem zweiten Gewindeabschnitt 214 sind Ausblasnuten 216 vorgesehen, welche in diesem Ausführungsbeispiel gemäß den Figuren 2A und 2B in Form von Abflachungen im Gewinde ausgebildet sind. Diese Ausblasnuten ermöglichen ein Entweichen von Gasen, wie beispielsweise Luft, beim Einschrauben des Steckfühlers 110 in das Gehäuse. Dabei sind bei dem in Figur 2A und 2B dargestellten Ausführungsbeispiel die Ausblasnuten 216 einander diametral gegenüberliegend dargestellt, wobei genau zwei Ausblasnuten 216 in Form von Gewindeabflachungen vorgesehen sind. In diesem zweiten Gewindeabschnitt 214 bilden also die dortigen unterbrochene Gewindegänge 218.

Wie oben dargestellt, ist es besonders bevorzugt, den Sensorkörper 112 ganz oder teilweise mittels eines pulvermetallurgischen Verfahrens herzustellen. Insbesondere kann hierbei ein Metall-Spritzgießverfahren zum Einsatz kommen, um den Sensorkörper 112 herzustellen. Spritzgießtechnisch sind die beiden durchgehenden Gewindegänge 212 noch problemlos und maßhaltig herstellbar. Eine Entformung ist durch die Ausgestaltung des Außengewindes 146 noch problemlos auch mittels eines einfachen Werkzeuges, beispielsweise eines einfachen Auf-zu-Werkzeuges, realisierbar. Eventuell vorhandene Trenngrate, welche sich durch den Spritzgießvorgang ergeben, werden in der Regel beim Einschrauben des Steckfühlers 110 in das Gehäuse abgeschert. Durch die Positionierung der durchgehenden Gewindegänge 212 des ersten Gewindeabschnitts 210 im oberen Bereich des Außengewindes 146 führt dieses Abscheren nicht zu einer Erhöhung des Einschraubmomentes. Pulvermetallurgische Verfahren und deren Durchführung sind dem Fachmann bekannt, so dass beispielsweise auf kommerziell erhältliche Spritzgießmischungen, Katalysatoren, Entbinderungsmaterialien und andere Chemikalien und Prozesse zurückgegriffen werden kann.

Der Steckfühler 110 ist in den Figuren 1, 2A und 2B lediglich unvollständig abgebildet. So sind insbesondere weitere Komponenten des Steckfühlers, wie beispielsweise elektrische Verbindungen zum Drucksensor 124 und/oder zum Temperatursensorelement 142, nicht dargestellt. Üblicherweise ist dementsprechend auf dem Sechskant 114 auf der Oberseite, d.h. auf der dem Ende 130 gegenüberliegenden Seite, ein Gehäuse vorgesehen, welches beispielsweise einen Stecker zur Kontaktierung des Steckfühlers 110 (zum Beispiel zur Versorgung mit elektrischer Energie und/oder zum Signalabgriff), eine Elektronikplatine mit einer Ansteuer- und Auswerteschaltung, sowie weitere Komponenten beinhalten kann. Für diese Ausgestaltung sei beispielsweise auf Stefan Butzmann (Herausgeber): "Sensorik im Kraftfahrzeug" expert Verlag, 2006, Seite 77, verwiesen.

## Patentansprüche

1. Steckfühler (110) zur Messung mindestens einer Eigenschaft eines fluiden Mediums, insbesondere für den Einsatz im Kühlmittelkreislauf einer Klimaanlage eines Kraftfahrzeugs, aufweisend mindestens einen Sensor (124, 140) zur Erfassung der mindestens einen Eigenschaft, weiterhin aufweisend einen Sensorkörper (112) mit einem Außengewinde (146) zum Einschrauben des Steckfühlers (110) in eine Gewindebohrung eines Gehäuses, weiterhin aufweisend eine Dichtfläche (152) zum Abdichten eines Innenraumes des Gehäuses gegen einen Außenraum, **dadurch gekennzeichnet, dass** das Außengewinde (146) mindestens zwei Gewindeabschnitte (210, 214) aufweist:
- einen ersten Gewindeabschnitt (210), umfassend mindestens einen durchgehenden Gewindegang (212);
- einen zweiten Gewindeabschnitt (214) umfassend mindestens einen unterbrochenen Gewindegang (218), wobei mindestens eine Unterbrechung des mindestens einen unterbrochenen Gewindegangs (218) mindestens eine Ausblasnut (216) bildet.

2. Steckfühler (110) nach dem vorhergehenden Anspruch, wobei der zweite Gewindeabschnitt (214) zwischen dem ersten Gewindeabschnitt (210) und der Dichtfläche (152) angeordnet ist.

3. Steckfühler (110) nach einem der vorhergehenden Ansprüche, wobei der erste Gewindeabschnitt (210) zwischen einem und zwei durchgehende Gewindegänge (212) aufweist.

4. Steckfühler (110) nach einem der vorhergehenden Ansprüche, wobei die mindestens eine Ausblasnut (216) mindestens eine Abflachung im zweiten Gewindeabschnitt (214) umfasst.

5. Steckfühler (110) nach einem der vorhergehenden Ansprüche, wobei der Steckfühler (110) ganz oder teilweise mittels eines pulvermetallurgischen Verfahrens, insbesondere mittels eines Metall-Spritzgießverfahrens, hergestellt ist.

6. Steckfühler (110) nach dem vorhergehenden Anspruch, wobei das Außengewinde (146) in dem pulvermetallurgischen Verfahren, insbesondere mittels des Metall-Spritzgießverfahrens, hergestellt ist.

7. Steckfühler (110) nach einem der vorhergehenden Ansprüche, wobei der mindestens eine Sensor (124, 140) mindestens einen der folgenden Sensoren umfasst: einen Temperaturfühler (140), insbesondere einen NTC-Widerstand; einen Drucksensor (124); einen Luftmassenmesser.

8. Steckfühler (110) nach dem vorhergehenden Anspruch, wobei der Steckfühler (110) als p-T-Sensor ausgebildet ist.

9. Steckfühler (110) nach dem vorhergehenden Anspruch, wobei ein Temperaturfühler (140) in einem schräg zu einer Sensorkörperachse (120) des Steckfühlers (110) angeordneten Messfinger (136) aufgenommen ist, wobei der Temperaturfühler (140) zumindest näherungsweise auf der Sensorkörperachse (120) angeordnet ist.

10. Steckfühler (110) nach einem der vorhergehenden Ansprüche, wobei die Dichtfläche (152) auf einer dem fluiden Medium zuweisenden Seite (130) des Sensorkörpers (112) eine Kegeldichtung (152) aufweist.

11. Verfahren zur Herstellung eines Steckfühlers (110) zur Messung mindestens einer Eigenschaft eines fluiden Mediums, insbesondere für den Einsatz im Kühlmittelkreislauf einer Klimaanlage eines Kraftfahrzeugs, wobei der Steckfühler (110) mindestens einen Sensor (124, 140) zur Erfassung der mindestens einen Eigenschaft aufweist, wobei der Steckfühler (110) weiterhin einen Sensorkörper (112) mit einem Außengewinde (146) zum Einschrauben des Steckfühlers (110) in eine Gewindebohrung eines Gehäuses aufweist, wobei der Steckfühler (110) weiterhin eine Dichtfläche (152) zum Abdichten eines Innenraumes des Gehäuses gegen einen Außenraum aufweist, wobei das Außengewinde (146) mindestens zwei Gewindeabschnitte (210, 214) aufweist:
- einen ersten Gewindeabschnitt (210), umfassend mindestens einen durchgehenden Gewindegang (212);
- einen zweiten Gewindeabschnitt (214) umfassend mindestens einen unterbrochenen Gewindegang (218), wobei mindestens eine Unterbrechung des mindestens einen unterbrochenen Gewindegangs (218) mindestens eine Ausblasnut (216) bildet,
wobei der Steckfühler (110) ganz oder teilweise mittels eines pulvermetallurgischen Verfahrens, insbesondere mittels eines Metall-Spritzgießverfahrens, hergestellt wird.

## Claims

1. Plug-in sensor (110) for measuring at least one property of a fluid medium, in particular for use in the coolant circuit of an air-conditioning system of a motor vehicle, having at least one sensor (124, 140) for sensing the at least one property, also having a sensor body (112) with an external thread (146) for screwing the plug-in sensor (110) into a threaded bore in a housing, also having a sealing surface (152) for sealing an interior space of the housing from an exterior space, **characterized in that** the external thread (146) has at least two thread portions (210, 214):
- a first thread portion (210), comprising at least one continuous thread (212); and
- a second thread portion (214), comprising at least one interrupted thread (218), wherein at least one interruption of the at least one interrupted thread (218) forms at least one blow-out groove (216).

2. Plug-in sensor (110) according to the preceding claim, wherein the second thread portion (214) is arranged between the first thread portion (210) and the sealing surface (152).

3. Plug-in sensor (110) according to one of the preceding claims, wherein the first thread portion (210) has between one and two continuous threads (212).

4. Plug-in sensor (110) according to one of the preceding claims, wherein the at least one blow-out groove (216) comprises at least one flattening in the second thread portion (214).

5. Plug-in sensor (110) according to one of the preceding claims, wherein the plug-in sensor (110) is produced entirely or partially by means of a powder-metallurgical process, in particular by means of a metal injection-moulding process.

6. Plug-in sensor (110) according to the preceding claim, wherein the external thread (146) is produced in the powder-metallurgical process, in particular by means of the metal injection-moulding process.

7. Plug-in sensor (110) according to one of the preceding claims, wherein the at least one sensor (124, 140) comprises at least one of the following sensors: a temperature sensor (140), in particular an NTC thermistor; a pressure sensor (124); or an air mass meter.

8. Plug-in sensor (110) according to the preceding claim, wherein the plug-in sensor (110) is formed as a p-T sensor.

9. Plug-in sensor (110) according to the preceding claim, wherein a temperature sensor (140) is mounted in a measuring finger (136) arranged obliquely in relation to a sensor body axis (120) of the plug-in sensor (110), wherein the temperature sensor (140) is arranged at least approximately on the sensor body axis (120).

10. Plug-in sensor (110) according to one of the preceding claims, wherein the sealing surface (152) on a side (130) of the sensor body (112) that is facing the fluid medium has a conical seal (152).

11. Method for producing a plug-in sensor (110) for measuring at least one property of a fluid medium, in particular for use in the coolant circuit of an air-conditioning system of a motor vehicle, wherein the plug-in sensor (110) has at least one sensor (124, 140) for sensing the at least one property, wherein the plug-in sensor (110) also has a sensor body (112) with an external thread (146) for screwing the plug-in sensor (110) into a threaded bore in a housing, wherein the plug-in sensor (110) also has a sealing surface (152) for sealing an interior space of the housing from an exterior space, wherein the external thread (146) has at least two thread portions (210, 214):
- a first thread portion (210), comprising at least one continuous thread (212); and
- a second thread portion (214), comprising at least one interrupted thread (218), wherein at least one interruption of the at least one interrupted thread (218) forms at least one blow-out groove (216),
wherein the plug-in sensor (110) is produced entirely or partially by means of a powder-metallurgical process, in particular by means of a metal injection-moulding process.

## Revendications

1. Sonde enfichable (110) pour mesurer au moins une propriété d'un milieu fluide, notamment pour l'utilisation dans le circuit de réfrigérant d'une installation de climatisation d'un véhicule automobile, présentant au moins un capteur (124, 140) pour la détection de l'au moins une propriété, présentant en outre un corps de capteur (112) avec un filetage externe (146) pour le vissage de la sonde enfichable (110) dans un alésage fileté d'un boîtier, présentant en outre une surface d'étanchéité (152) pour réaliser l'étanchéité d'un espace interne du boîtier vis-à-vis d'un espace extérieur, **caractérisée en ce que** le filetage externe (146) présente au moins deux portions de filetage (210, 214) :
- une première portion de filetage (210) comprenant au moins un filet continu (212) ;
- une deuxième portion de filetage (214) comprenant au moins un filet interrompu (218), au moins une interruption de l'au moins un filet interrompu (218) formant au moins une rainure de soufflage (216).

2. Sonde enfichable (110) selon la revendication précédente, dans laquelle la deuxième portion de filetage (214) est disposée entre la première portion de filetage (210) et la surface d'étanchéité (152).

3. Sonde enfichable (110) selon l'une quelconque des revendications précédentes, dans laquelle la première portion de filetage (210) présente entre un et deux filets continus (212).

4. Sonde enfichable (110) selon l'une quelconque des revendications précédentes, dans laquelle l'au moins une rainure de soufflage (216) comprend au moins un méplat dans la deuxième portion de filetage (214).

5. Sonde enfichable (110) selon l'une quelconque des revendications précédentes, dans laquelle la sonde enfichable (110) est fabriquée complètement ou en partie au moyen d'un procédé à poudre métallurgique, notamment au moyen d'un procédé de moulage par injection de métal.

6. Sonde enfichable (110) selon la revendication précédente, dans laquelle le filetage externe (146) est fabriqué dans le procédé à poudre métallurgique, notamment au moyen du procédé de moulage par injection de métal.

7. Sonde enfichable (110) selon l'une quelconque des revendications précédentes, dans laquelle l'au moins un capteur (124, 140) comprend au moins l'un des capteurs suivants : une sonde de température (140), notamment une résistance NTC ; un capteur de pression (124) ; un débitmètre massique d'air.

8. Sonde enfichable (110) selon la revendication précédente, dans laquelle la sonde enfichable (110) est réalisée sous forme de capteur p-T.

9. Sonde enfichable (110) selon la revendication précédente, dans laquelle une sonde de température (140) est reçue dans un doigt de mesure (136) disposé obliquement par rapport à un axe du corps de capteur (120) de la sonde enfichable (110), la sonde de température (140) étant disposée au moins approximativement sur l'axe du corps de capteur (120).

10. Sonde enfichable (110) selon l'une quelconque des revendications précédentes, dans laquelle la surface d'étanchéité (152) présente, sur un côté (130) du corps de capteur (112) tourné vers le milieu fluide, un joint d'étanchéité conique (152).

11. Procédé de fabrication d'une sonde enfichable (110) pour la mesure d'au moins une propriété d'un milieu fluide, notamment pour l'utilisation dans le circuit de réfrigérant d'une installation de climatisation d'un véhicule automobile, la sonde enfichable (110) présentant au moins un capteur (124, 140) pour la détection de l'au moins une propriété, la sonde enfichable (110) présentant en outre un corps de capteur (112) avec un filetage externe (146) pour le vissage de la sonde enfichable (110) dans un alésage fileté d'un boîtier, la sonde enfichable (110) présentant en outre une surface d'étanchéité (152) pour réaliser l'étanchéité d'un espace interne du boîtier vis-à-vis d'un espace extérieur, le filetage externe (146) présentant au moins deux portions de filetage (210, 214) :
- une première portion de filetage (210) comprenant au moins un filet continu (212) ;
- une deuxième portion de filetage (214) comprenant au moins un filet interrompu (218), au moins une interruption de l'au moins un filet interrompu (218) formant au moins une rainure de soufflage (216),
la sonde enfichable (110) étant fabriquée complètement ou en partie au moyen d'un procédé à poudre métallurgique, notamment au moyen d'un procédé de moulage par injection de métal.
